# EUROPEAN PATENT SPECIFICATION

(11) **EP 3 498 093 B1**
(45) Date of publication and mention of the grant of the patent: **10.05.2023**
(21) Application number: 18213022.9
(22) Date of filing: 17.12.2018
(51) Int. Cl.: A01K 97/00, A01K 97/12

(54) **A FISHING APPLIANCE AND A FISHING ACCESSORY**
FISCHFANGGERÄT UND ZUBEHÖR ZUM ANGELN
APPAREIL DE PÊCHE ET ACCESSOIRE DE PÊCHE

(30) Priority: 18.12.2017 GB 201721158
(43) Date of publication of application: 19.06.2019
(73) Proprietor: Wolf International Limited, London WC2H 9JQ (GB)
(72) Inventor: Fox, Clifford Royston, Upminster, RM14 1 TP (GB); Fox, Richard Royston, Brentwood, Essex CM14 4HA (GB); Coombes, Neil John, Romford, Essex, RM5 2UL (GB)
(74) Representative: Carpmaels & Ransford LLP

(56) References cited:
- EP-A1- 2 147 596
- GB-A- 2 273 982
- GB-A- 2 274 761
- GB-A- 2 289 603
- GB-A- 2 499 420

## Description

### Field of the Disclosure

The invention relates to a fishing appliance for controlling ancillary fishing accessories. More particularly, it relates to an electronic fishing appliance with a port for controlling light-emitting ancillary fishing accessories that are connected to the electronic fishing appliance.

### Background

There are many known electronic fishing appliances to assist anglers whilst angling. These electronic fishing appliances take various forms and serve a wide variety of functions. Ancillary fishing accessories are known that attach to electronic fishing appliances to provide additional or enhanced functionality. Ancillary fishing accessories are typically simple, well-sealed, robust devices without any user interfaces.

Dependent on the local lighting conditions, and especially at night, it can be difficult to see ancillary fishing accessories, and therefore it can be difficult to use them effectively. As a result, light-emitting ancillary fishing accessories were developed. Light-emitting ancillary fishing accessories typically use one of two types of illumination: Tritium powered illumination and electric powered illumination.

Tritium powered illumination uses sealed vials of a gas comprising Tritium to generate illumination. Since the vials are sealed and the inherent radioactivity of Tritium powers the illumination there is no way to change the state of the light that is emitted.

Several designs of electric powered illumination are known but light-emitting diode (LED) based designs are preferred due to the high efficiency and robustness of LEDs. LEDs require electric power to function and therefore LEDs can be switched on and off by applying or removing electric power respectively. For ancillary fishing accessories, electric power to the LEDs is typically supplied from a battery to the LEDs to emit a particular state of light.

In most fishing locations, even at night, background light sources are present to some extent. Such background light sources may include other light-emitting ancillary fishing accessories. It is therefore preferable to use a light-emitting ancillary fishing accessory with a distinctive state of emitted light to distinguish it from the background light sources. To ensure the light-emitting ancillary fishing accessory used by an angler has a distinctive state of emitted light, the angler needs to carry a selection of different light-emitting ancillary fishing accessories to let the angler choose from a selection of states of emitted light.

This is wasteful and it is also awkward for the angler as each of the selection of different light-emitting ancillary fishing accessories may look similar when not powered. To work out which light-emitting ancillary fishing accessory of a selection emits the desired state of light may require exhaustive testing by sequentially plugging in the light-emitting ancillary fishing accessories of the selection until a light-emitting ancillary fishing accessory of the desired state of light is found.

The present invention addresses, at least some of, these problems.

EP2147596 A1 relates to an electronic fishing appliance and describes a fish-bite indicating device having a fishing line movement sensor and an indicator signal generating circuit connected to the sensor to provide an indicator signal upon detection of line movement by the sensor. The indicator signal generating circuit is provided with an output which communicates with a further bite indicating device. The device is provided with illumination means capable of adopting any selected one of a plurality of different colours with which it is illuminated in dependence upon a signal issued by the indicator signal generating circuit.

GB2274761 A relates to a weight for providing visual indication of movement of a fishing line comprises a translucent main body, a connector for suspending the weight from the fishing line, and an electrically actuated light emitting device, such as an LED, mounted in the main body and connected to a switch controlled by a line movement detector. The switch is operated, and the weight illuminated, whenever any movement of the line is detected, thus allowing the direction of movement of the weight, and hence of the line, to be determined in the dark.

GB2499420 relates to a bobbin which is connectable to a fishing line in order to move with a section of the line and thereby provide a visual indication of a change in tension of the line, with a sensor being coupled for movement with the bobbin to provide an electrical output signal indicative of the acceleration or the position of the bobbin. The sensor may be a micro-electro-mechanical system (MEMS) accelerometer or inclinometer. A processor is preferably provided for analysing the electrical output signal of the MEMS sensor to provide an indication of the rate of rise and fall of the sensor. The processor may be operative to provide an audible or visible alarm indication. Also disclosed is the bobbin of the invention in combination with a bite alarm responsive to line movement, the bite alarm incorporating a processor operative to analyse the electric output signal of the sensor coupled to the bobbin. The bite alarm may be operative to activate the sensor only after detection of movement of the fishing line.

### Summary of the Disclosure

The present invention provides an electronic fishing appliance according to claim 1, with further optional features defined by the dependent claims.

According to a first aspect of the invention defined in claim 1, there is an electronic fishing appliance comprising a port for releasably connecting to an ancillary fishing accessory, the ancillary fishing accessory having at least one light-emitting element; and a controller configured to control the state of the light emitted by the at least one light-emitting element when the ancillary fishing accessory is connected to the port; the electronic fishing appliance is configured to receive data from a connected ancillary fishing accessory, wherein the electronic fishing appliance is configured to communicate wirelessly with a remote control and transmit data to the remote control, and wherein the electronic fishing appliance is configured to relay data from the connected ancillary fishing accessory to the remote control. Therefore, the electronic fishing appliance can conveniently and easily control any ancillary fishing accessory that is plugged in. Electronic fishing appliances and ancillary fishing accessories are devices that are suitable for use in common fishing conditions, which may include high humidity or damp environments, and/or in remote locations. A port for releasably connecting means a port that is configured so a user can form and break a connection, in normal use, as necessary.

Optionally, the electronic fishing appliance is configured to adjust the state of the light emitted to a state set by a user. This means that once the electronic fishing appliance is configured, the user may use it with multiple ancillary fishing accessories, which are configurable to emit different states of light, without having to individually configure the multiple ancillary fishing accessories. This also means that a connected ancillary fishing accessory can be configured despite not having a user interface.

Optionally, the electronic fishing appliance is configured to adjust the state of the light emitted to a state in response to stimulus. This means that the ancillary fishing accessories can serve as an additional notification system to alert the user to particular stimulus.

Optionally, the electronic fishing appliance is configured to adjust the state of the light emitted from a first state to a second state in response to stimulus. The first state may be a default state or it may be a state that indicates a particular operational parameter is active. Once the stimulus has ended the electronic fishing appliance may return to the first state, or it may stay in the second state to ensure the user is aware of the occurrence of the stimulus.

Optionally, the stimulus comprises a detected event. This ensures the occurrence of the detected event is effectively signalled to the user.

Optionally, the stimulus is a change in status of the electronic fishing appliance. The ancillary fishing accessory will therefore serve to effectively alert the user to the change in status. The status may also be a parameter of the electronic fishing appliance.

Optionally, the stimulus is a change in status of the ancillary fishing accessory. This may serve to warn of potential problem with the ancillary fishing accessory. For example, it may warn that the connection to the electronic fishing appliance is compromised. The status can relate to a detected event or an operational parameter. For example, the status may be motion that has been detected by the ancillary fishing accessory.

Optionally, the stimulus comprises a signal from another electronic fishing appliance. This serves to let the ancillary fishing accessory convey information about another electronic fishing appliances in communication with the electronic fishing appliance. The stimulus may also be formed taking into account operational parameters or detected events from multiple electronic fishing appliances.

Optionally, the stimulus is motion of the fishing line. As an example, the control may configure the ancillary fishing accessory to emit a continuous weak green light in a default mode and then to emit a flashing bright red when motion of the fishing line is detected.

Optionally, the stimulus is an alarm signal. The electronic fishing appliance and ancillary fishing accessory can therefore form, at least part of, a security system. Such a security system has the advantage that it may not be apparent and automatically covers the electronic fishing appliance and auxiliary fishing accessory, which may be high value items.

Optionally, the alarm signal indicates a security breach has occurred. The security breath may relate to a detected event, such as an unauthorized access or motion of the electronic fishing appliance, ancillary fishing accessory, or another device in communication with the electronic fishing appliance. As an example, a passive infra-red (PIR) sensor may detect unauthorized access to a tent and signal a remote control, the remote control will then pass this signal to an electronic fishing appliance, the electronic fishing appliance may then react to the signal by making an ancillary fishing accessory flash red, and the user will thereby be alerted to the unauthorized access of the tent by the flashing red ancillary fishing accessory.

Optionally, the state of the light emitted is automatically adjusted according to the local environment or current time. This reduces the eye strain of the user and prevents a bright state of the emitted light degrading the night vision of the user.

Optionally, the state of the light emitted is automatically adjusted to reflect an operational mode. This serves to effectively signal the user the operational mode and prevents mistakes because of incorrect assumptions about the operational mode. For example, missing an important notification on an electronic fishing appliance because it is set to be silent.

Optionally, the electronic fishing appliance is configured to identify the type of the ancillary fishing accessory that is connected. This makes the electronic fishing appliance easy to use because connected ancillary fishing accessories can simply be plugged in, rather than requiring the user to identify devices and set-up the electronic fishing appliance accordingly.

Optionally, the electronic fishing appliance is configured to adapt control signals according to the type of the ancillary fishing accessory that is connected. This is important to ensure that connected ancillary fishing accessories are correctly powered, and are not damaged by excess voltage or current.

Optionally, the at least one light-emitting element comprises a light-emitting diode. Light-emitting diodes (LEDs) are particularly suited for electronic control as LEDs can be turned on and off quickly without risk of damage or serious reduction in operational lifetime. The number of states of light that can be emitted is therefore increased compared to other light sources.

Optionally, the light-emitting diode comprises a multicoloured light-emitting diode. Multi-coloured LEDs are further suited for electronic control as their colour can be easily and quickly changed. The number of states of light that can be emitted is therefore further increased compared to other light sources and single colour LEDs.

Optionally, the state of the light emitted comprises at least one of: the colour of the emitted light; the intensity of the emitted light; the flashing frequency of the emitted light; the duty cycle of the emitted light; and the modulation of the emitted light. Combinations of these states of the light emitted can be used to produce complex patterns of light. The produced pattern is therefore only limited by the capabilities of the LED. Continuously off is not a state of light emitted since no light is emitted when an LED is not powered.

Optionally, the at least one light-emitting element comprises a plurality of light-emitting elements. This offers a level of redundancy as failure of one light-emitting element of the plurality of light-emitting elements may not render the ancillary fishing accessory inoperable. In some cases, the at least one light-emitting element has its own inbuilt circuitry to assist in controlling the state of the light that is emitted. In this case, the signal sent by the controller can be simple regardless of the pattern complexity, relating to the state of the light emitted, that is selected.

Optionally, the state of the light emitted comprises which light-emitting element, or combinations of light-emitting elements, of the plurality of light-emitting elements is emitting light. This may help ensure the task of illumination is shared more equally across the light-emitting elements, which may help to maximise the lifetime of the light-emitting elements.

Optionally, the electronic fishing appliance is a bite detector. Such devices have a particular need to function at night and to ensure status events are well signalled to the user.

Optionally, the electronic fishing appliance is configured to control one or more operational parameters of the ancillary fishing accessory. The configuration of the control operational parameter may occur automatic. For example, connecting an ancillary fishing accessory to an electronic fishing appliance may change the colour of the light emitted to match that selected on the electronic fishing appliance. Alternatively, a user can select a particular operational parameter for the ancillary fishing accessory using a user interface on the electronic fishing appliance.

Optionally, the communication is bi-directional. This enables the current mode and status of the electronic fishing appliance and ancillary fishing accessory to be quickly ascertained and taken into account by the user or any control system. The electronic fishing appliance and ancillary fishing accessory can be connected to a wider network of electronic appliances, the network being provided by the remote control.

Optionally, the electronic fishing appliance is configured to change one or more operational parameters according to one or more signals from the remote control. This enables convenient remote control of the system. This is especially advantageously if the user interface on the electronic fishing appliance is broken or not known by the user.

Optionally, the ancillary fishing accessory is configured to change one or more operational parameter according to one or more signals from the remote control. As with the electronic fishing appliance this is useful in centralizing control, which is more convenient for the user.

Optionally, the one or more signals are relayed through the electronic fishing appliance. This affords a simpler construction of ancillary fishing accessory as wireless connections, which are suitable for connecting to the remote control, are not necessary.

Optionally, the port is configured to physically couple the ancillary fishing accessory and the electronic fishing appliance. Physically coupling means that wireless components do not need to be used. Additionally, it helps prevent accidental loss of ancillary fishing accessories which may be small and difficult to locate if dropped.

Optionally, the port comprises two electrical connections. Optionally, the port comprises four electrical connections. Optionally, the port is configured to provide two channels. These configurations ensures sufficient contacts and communication capabilities without having connections so close that likely debris will short the contacts.

Optionally, the port is a 2.5 mm jack or a 3.5 mm jack. Both of these formats are industry standards and therefore enable other, and existing, ancillary fishing accessories to be connected.

Optionally, the electronic fishing appliance is an electronic bite detector. Electronic bite detectors are especially suited for connection of ancillary fishing accessories, such as fishing hangers, because of their typical fitting location on the fishing line.

Optionally, there is an ancillary fishing accessory configured to connect to the port of the above-mentioned electronic fishing appliance.

Optionally, a combination comprises the electronic fishing appliance and an ancillary fishing accessory for indicating movement of a fishing line, the ancillary fishing accessory comprising: a body comprising at least one light-emitting element; a connector for releasably coupling the body to a fishing line; and a plug for releasably connecting to a port on the electronic fishing appliance and for transmitting electric power to the at least one light-emitting element; wherein the ancillary fishing accessory is configured so that the state of the light emitted is controllable by the electronic fishing appliance.

Optionally, the body of the above-mentioned ancillary fishing accessory is at least partially transparent. This constructions serves to improve the visibility of the at least one light-emitting element.

Optionally, the ancillary fishing accessory comprises a coupling for attaching at least one removable weight. Additional weight helps in adverse conditions. For example, additional weight help stop a hanger swinging in the wind and causing false indications. Having a coupling ensures that the optimal weight can be selected to avoid undue loading of the fishing whilst still preventing excessive motion.

Optionally, there is a kit comprising the above-mentioned ancillary fishing accessory, and the above-mentioned electronic fishing appliance.

Optionally, there is a remote control figured to bilaterally wirelessly communicate with, and control, the above-mentioned electronic fishing appliance.

### Brief Description of Drawings

The invention is described below by way of example only with reference to the following figures, wherein:
Figure 1 is a block diagram of an electronic fishing appliance, according to the first aspect of the present invention.
Figure 2 is a projection view of a bite detector.
Figure 3 is a bottom view of the bite detector.
Figure 4 shows the bite detector of figure 2 with a PIR sensor connected and an adaptable multicolour fishing hanger connected.
Figure 5 is a projection view of the remote control, displaying the front, right, and bottom face.
Figure 6 is a cross sectional view of an adaptable multicolour fishing hanger.
Figure 7 is a front view of the adaptable multicolour fishing hanger.
Figure 8 is a front view of the adaptable multicolour fishing hanger with a weight attached.
Figure 9 is a block diagram showing the network layout of the remote control and several electronic fishing appliances.
Figure 10 is an image of a kit comprising the remote control, a first bite detector (right) with a wired PIR sensor and an adaptable multicolour fishing hanger and a second bite detector (left) with an adaptable multicolour fishing hanger.
Figure 11 provides a flow chart of the procedure to pair an electronic fishing appliance with a remote control.

Similar features in the figures are referred to by similar reference numerals.

### Detailed Description

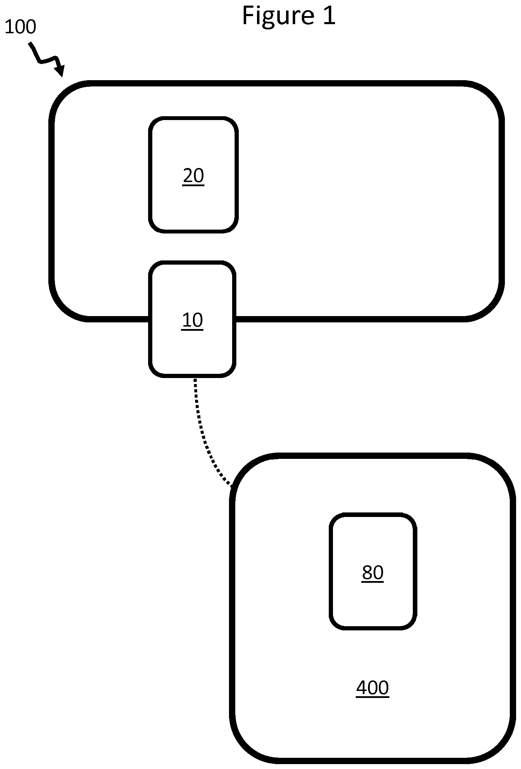

An exemplary electronic fishing appliance 100 is illustrated in figure 1. The electronic fishing appliance 100 contains a port 10. The port 10 enables connection with an ancillary fishing accessory 400. The ancillary fishing accessory 400 contains a light-emitting element 80. The electronic fishing appliance 100 contains a controller 20. The controller is configured to control the state of the light emitted by the light-emitting element 80.

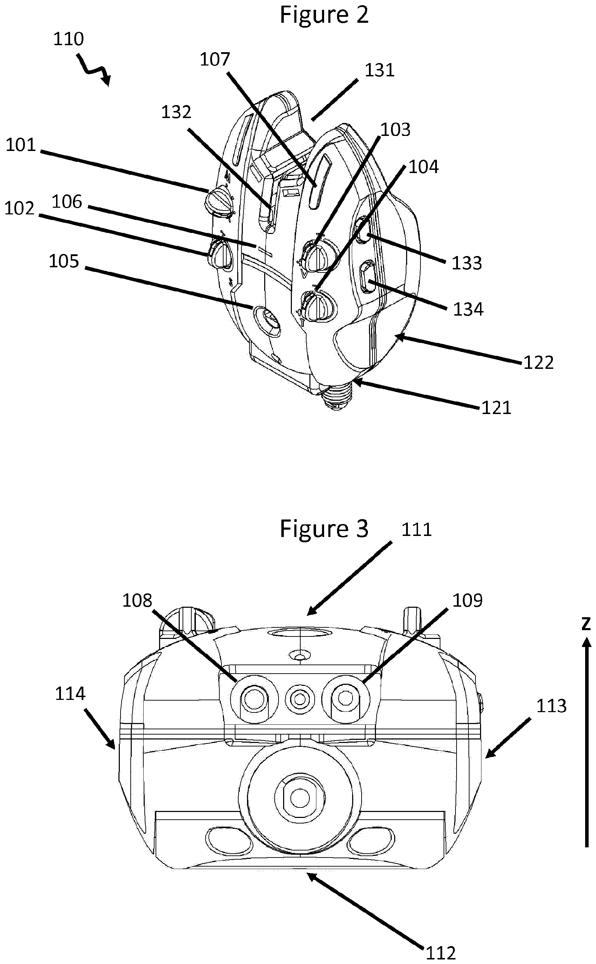

A particular example of such an electronic fishing appliance 100 is the bite detector 110 shown in figures 2 to 4. The bite detector 110 is an electronic fishing appliance 100 with a case defined by two pieces, a front half 121 and a back half 122, that come together to form a roughly spheroidal shape, with flattened front and back faces, and a channel at the top providing the passageway 131 from the front to the back of the bite detector 110 for a fishing line.

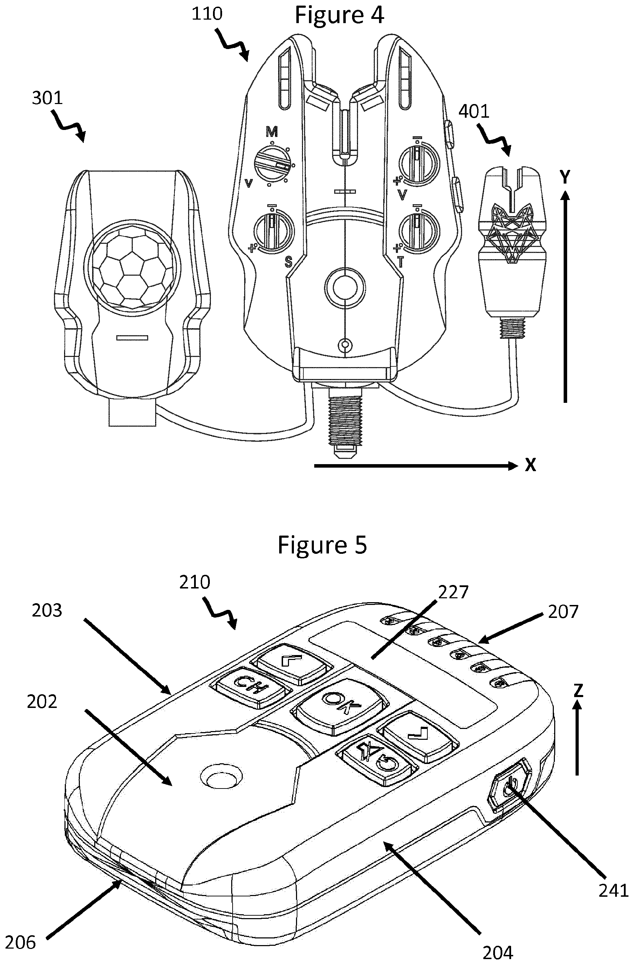

To describe the case of the bite detector, four faces are defined: a front face 111, a back face 112, a left face 113, and a right face 114. The bite detector will be described as if it is sitting vertically upstanding resting on its bottom most feature with the front face facing a user (as illustrated in figure 4). The left to right direction is indicated in figure 4 by the arrow marked X. The bottom to top direction is indicated in figure 4 by the arrow marked Y. The front to back direction is orthogonal to the X and Y directions and is indicated in figure 3 by the marrow marked Z.

Each face comprises a surface that has been filleted, curved, and/or shaped to improve its ergonomics, meaning a user can comfortably use it even with gloved hands. The surfaces are generally not distinct but instead transition smoothly between adjacent faces.

The front face 111 which is formed on the front half 121 has four cavities each of which receives a knob. The four knobs are the mode knob 101, sensitivity knob 102, volume knob 103, and tone knob 104. The knobs are arranged in a two by two formation with the mode knob 101 and sensitivity knob 102 located on the left side of the bite detector 110, and the volume knob 103 and tone knob 104 on the right hand side of the bite detector 110. The knobs are sufficiently offset from the centre line to avoid interference with any fishing line passing through the passageway 131. The mode knob 101 and volume knob 103 are located above and in line with the sensitivity knob 102 and tone knob 104 respectively.

In the left right centre of the front face, approximately a third of the height of the bite detector is a speaker 105 for alerting the user. The speaker 105 can produce whatever sounds are required according to the operation mood, detected event, or operational parameter of the bite detector.

In the left right centre of the front face, above the speaker 105 is a central LED 106, which is also called the night light. The LED 106 can change the state of emitted light according to the operation mode, detected event, or operational parameter of the bite detector 110.

The passage way 131 comprises a wide groove and at the base of the wide groove a narrow groove 132 containing a roller wheel for sensing the motion of a fishing line.

On the bottom of the bite detector there are two ports, which are the universal port 108 and the wired accessory port 109. The universal port 108 is known as the IQ Port 108. The ports are located in an extended edge of the front half of the case and are received in two cavities. The universal port 108 provides a socket for a 3.5 mm jack plug with 4 contacts providing 2 communication channels.

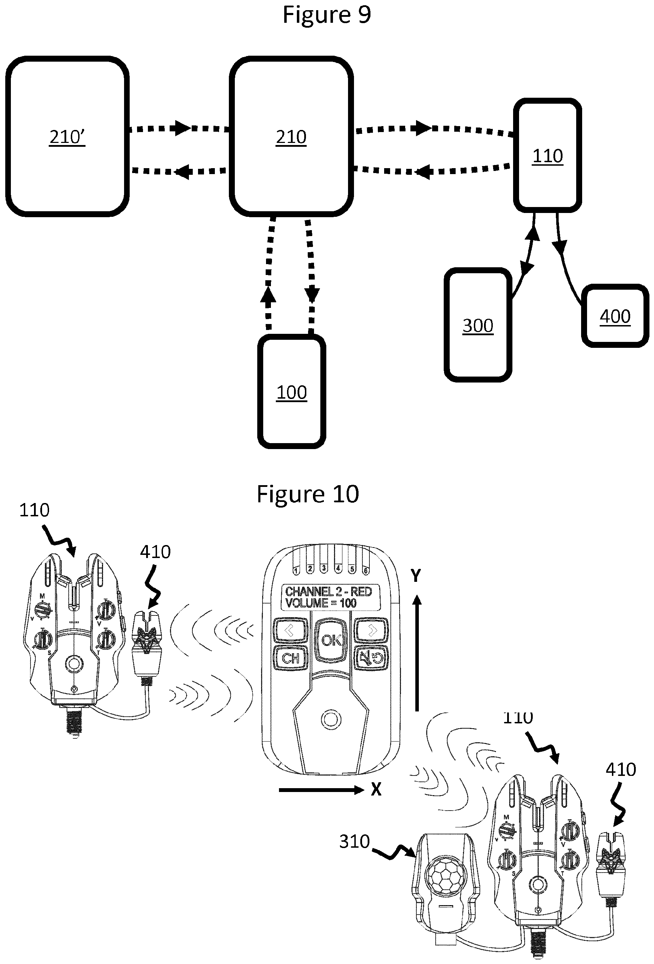

The wired accessory port 109 is a 2.5 mm jack connection suitable for powering a light-emitting ancillary fishing accessory 400, such as the fishing hangar 410 as seen in figure 10. Fishing hangers are used to help alert users to motion of a fishing line, such devices includes hangers, bobbins, and swingers. Through this application, hanger is used as the generic term to cover all of these devices.

Since the jack connection is an industry standard, existing single colour fishing hangers can be powered by the wired accessory port 109 of the bite detector 110. In this case, the colour of the existing fishing hanger will not be adjustable.

The wired accessory port 109 is configured to be backwardly compatible with standard ancillary fishing accessory 400. Some multicolour fishing hangars 410 that are connected to the wired accessory port 109 are configured to adapt the state of light they emit according to the operational parameters of the bite detector 110. The bite detector is configured to attempt to identify ancillary fishing accessories 400 that are connected to the wired accessory port 109. Therefore, multicolour fishing hangers 410 that are connected will be recognised as such and appropriately powered. Similarly, connected standard fishing hangers will be recognised as such and appropriately powered. Such adaptable multicolour fishing hangers 410 can therefore serve to act as a secondary notification system by variation of the state of their emitted light. The bite detector 110 is configured to be connected to a remote control 210 that forms a wireless network by a wireless connection. In this case, when multicolour hangers 410 are connected to the wired accessory point 109 the adaptable multicolour fishing hangers 410 may reflect an operational parameter or status of any electronic fishing appliance 100 that is in communication with the remote control 200.

The universal port 108 therefore serves as a connection to enable electronic fishing appliances 100 without wireless networking ability, or with damaged networking ability, to connect to the network provided by the remote control 200. The universal port 108 can send control signals to connected electronic fishing appliances and receive data from connected electronic fishing appliances if the connected electronic fishing appliances have such functionality. The universal port 108 assesses the electrical properties of connected electronic fishing appliances, such as the resistance between connections, to ascertain the type of electronic fishing appliances that is connected. A database of known electronic fishing appliances is then searched to find the operational parameters appropriate for an electronic fishing appliance of the ascertained type. The universal port 108 is then configured to ensure that the appropriate voltages and/or currents are supplied or monitored so as not to damage the connected electronic fishing appliance and ensure it is appropriately monitored to avoid loss of data. The universal port 108 is protected against incorrect insertion and short circuit.

The bite detector 110 therefore automatically interfaces with connected ancillary fishing accessories. The user does not therefore have to adapt the bite detector 110, such as by installing drivers or performing a configuration process when an ancillary fishing accessory is connected to the universal port 108. Appropriate operational parameters stored on the bite detector 110 or transmitted from a connected remote control 210 will be automatically transferred to the connected electronic fishing appliance once said electronic fishing appliance is connected to the universal port 108.

The bite detector case 120 is formed by joining two halves 121 and 122, which are differently shaped. The two halves of the case comprise molded cells which cooperate to prevent ingress of water or detritus into the body. The cells also increase structural rigidity and make the bite detector 110 more buoyant.

In some embodiments, the bite detector will have differing shapes to improve aesthetics. However, overall the form will remain similar to the form illustrated in figure 2.

Similarly, some embodiments accommodate additional buttons. The additional buttons include, in some embodiments, quick access buttons to facilitate the rapid configuration of key user functions.

### Adaptable multicolour fishing hanger

An example of an ancillary fishing accessory 400 is the fishing hanger 410 shown in figure 10. The fishing hanger 410, which can connect to the bite detector 110 via the wired accessory port 109, will now be described by reference to figure 4 and figures 6 to 8.

The fishing hanger 410 has a cylindrically symmetric case with a passageway at a first end. The passageway runs orthogonally to the axis of cylindrical symmetry of the case. The passageway comprises a main groove 31 with a narrow groove 32 extending from the base of the main groove. The fishing hanger is designed to releasably couple to a fishing line, and one such way of coupling is by pressing a fishing line into the narrow groove. Once pressed in place, the hanger is frictionally retained on the fishing line. Violent motion of the fishing line will serve to release the fishing hanger from the fishing line. In some embodiments, the line is retained between two spring loaded features, such as metal balls. The spring settings may be adjustable to allow the user to adapt how strongly the line is coupled to the hanger. Alternatively, the line can be retained between magnetic metal balls.

The case comprises two hollows 41, 42. The first hollow 42 may serve to house the light-emitting element. The second hollow 41 permits a cable from the bite detector 110 to enter. The cable is configured to supply the electricity necessary to power and control the light-emitting element so that it emits the desired state of the light.

The body of the fishing hanger 410 is partially translucent. Since the light emitting element is located within the case the light diffuses, or scatters, through the body. In some cases, the body has an image on the body that is projected by the illumination. In some cases, the image may be located on a flat portion of the body to improve the quality of the projection.

The light emitting element is a multiple colour LED, which is formed by a combination of LEDs of different colours. The state of the emitted light and whether or not the light is activated is controlled by electrical signals transmitted from the cable from the bite detector 110 that enters the body at a second end, which is the end at the opposite end to the passage way.

Variation of the state of the light emitted can be effected from the bite detector 110, or a remote control 210 via the bite detector 110 when a remote control is connected. The variation can include changes in the colour of the emitted light; the intensity of the emitted light; the flashing frequency of the emitted light; the duty cycle of the emitted light; the modulation of the emitted light; and combinations thereof. Continuously off is not a state of light emitted since no light is emitted when an LED is continuously off.

The body is formed and treated so that it an image is visible and the remaining light is diffused throughout the body. A narrow waist is also formed approximately equidistant from the first and second ends.

When the fishing hanger 410 is connected to the bite detector 110, the bite detector 110 controls the state of the emitted light. The bite detector 110 can also control whether or not light is emitted. When the bite detector 210 is coupled to a remote control 210, a user can control the hanger 410 from either the bite detector 110 or the remote control 210.

The bite detector 110 or remote control 210 may also be configured to change the state of the light emitted in response to a stimulus such as status signals from a bite detector, which may or may not be the coupled bite detector 110.

For example, the remote control 210 might configure a bite detector 110 to turn blue. A fishing hanger 410 connected to a blue light emitting bite detector 110 will go blue to harmonize with the blue bite detector 110. The remote control 210 may then be used to configure the fishing hanger 410 to turn red when a bite is detected on the bite detector 110.

The bite detector 110 and fishing hanger 410 can also be set into a security mode. In this mode, the lights will flash and bite detector alarm if an unauthorized event is detected. An unauthorized event includes uncoupling or moving of all electronic components forming the security system.

The fishing hanger 410 can be configured via the bite detector 110 or remote control 210 to set four night modes, which are:
1- fishing hanger illumination off until a bite is detected at which point the hanger illuminates at a automatically determined level.
2- fishing hanger illumination off until a bite is detected at which point the hanger illuminates at a manually set level.
3- fishing hanger illumination is set to automatically follows bite detector night light level & colour until a bite is detected at which point it matches bite notification parameters (level & colour) of the bite detector.
4- fishing hanger illumination is set at a manually set levels until a bite is detected at which point it matches bite notification parameters (level & colour) of the bite detector.

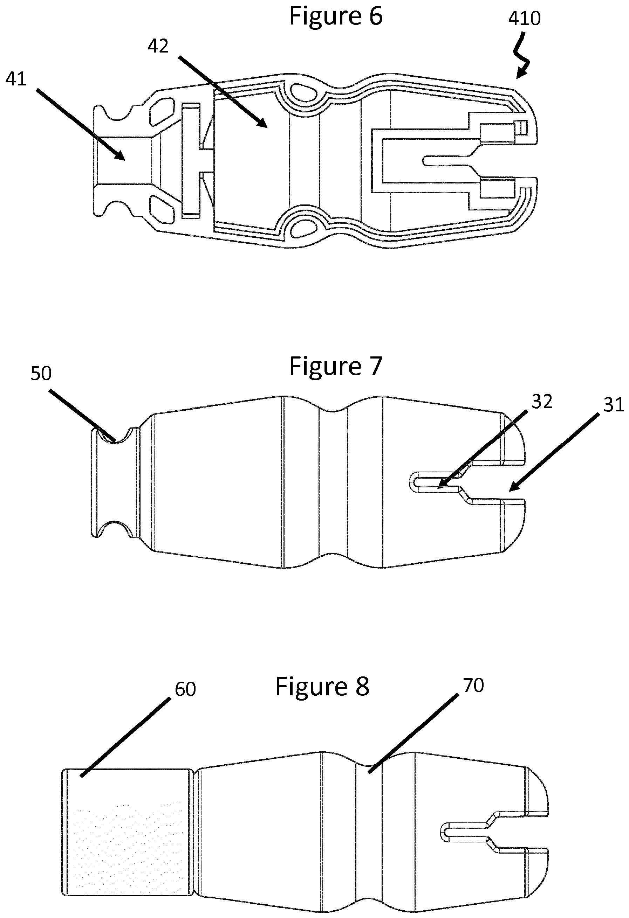

The body of the fishing hangar 410 may have a screw thread, located at the second end, to enable additional weights to be added, as shown in figure 4. Alternatively, the body can have a groove 50 to allow additional weights 60 to be added, as shown in figure 7 and 8.

In some embodiments, the groove 50 may only partially surround the body and provide two ledges on opposing sides. In this embodiment, a weight with a longitudinal groove to receive the cable and a complimentary feature to slide on both ledges can be clipped on to the body and frictionally retained thereon.

The additional weight allows the angler to adapt the loading on a coupled fishing line. The additional weight also serves to reduce the motion of the fishing hanger 410 in conditions that may lead to false alerts, such as windy conditions.

### PIR sensor

A PIR sensor, for use with the bite detector 110 via the universal accessory port 108, will now be described by reference to figure 4. In figure 4, it can be seen that the PIR sensor 310 has a front surface with a hemispherical window, formed as half a geodesic dome, which is partially transparent to infra-red signals. An electronic PIR sensor is located behind the geodesic dome. The electronic PIR sensor detects motion in the manner that is known to those skilled in the arts.

The detected signals are then processed and communicated back to the bite detector 110 via the universal accessory port.

The PIR sensor 310 is not in wireless communication with the bite detector 110 nor the remote control 210. It is instead physically coupled to the bite detector 110 through the universal port 108 on the bite detector 210. Therefore, the wired PIR sensor 310 operational parameters will be controllable by, or via, the bite detector 110, and status events from the PIR sensor 310 can be transmitted through the bite detector 110.

Therefore, due to the universal port 108, from a network perspective, the PIR sensor 310 can be considered to be connected equivalently to the bite detector 110.

A remote control 210 is not required to operate the wired PIR 310, or any other device connected through the universal port 108. However, the remote control 210 may operate any device connected through the universal port 108 and it may enable configuration of more operation parameters than are accessible by the bite detector alone 110.

The PIR sensor 310 is particularly useful when it comes to forming a security system as they are very effective at detecting unauthorized events. The PIR sensor has a multicolour LED. If connected to a bite detector 110, the state of the emitted light of the multicolour LED is adjustable by the bite detector 110, or by the remote control 210 via the bite detector 110.

### In use

In use, the bite detector 110 will be coupled to a support structure and a fishing line 50 passed through the passage way 131 over the moving guide 40. Dependent on the mode, the LED 106 may emit a selected state of light.

An adaptable multicolour fishing hanger 410 is then coupled to the fishing line by pressing the fishing line into the narrow passageway. The adaptable multicolour fishing hanger 410 is then connected to the bite detector 110 via the wired accessory port 109.

When connected the controller 20 of the bite detector will sense that the connected ancillary fishing device is an adaptable fishing hanger. The control will then supply the appropriate signals to ensure that the LED of the adaptable multicolour fishing hanger matches the selected state of light of the LED 106 of the bite detector.

If desired the angler can further configure the bite detector 110 and adaptable multicolour fishing hanger. For example he may select both to enter a green state of emitted light but to flash red when a bite is detected. The angler will set the configuration via the bite detector 110 or remote control 210 if used.

Should the angler decide to leave the bite detector, connected ancillary fishing accessory, and/or surrounding area he may activate an alarm mode. In this mode, if an authorized event is detected, such as motion of the bite detector, the bite detector and ancillary fishing accessory will enter an alarm mode that may include a emitting a bright flashing lights to alert the user.

### Remote control

A remote control 210 for remotely controlling the bite detector 110, and the fishing hanger 410 via the bite detector 110, will now be described by reference to figures 5, 9, 10 and 11. A remote control refers to any control that enables wireless control of a device. The remote control 210 is a portable battery-powered device with a case that is formed to be conveniently held in an angler's hand. The remote control 210 bilaterally communicates with connected electronic fishing appliances 100 and ancillary fishing accessories 400 that are connected to the connected electronic fishing appliances 100. The remote control 210 case can be defined by six faces, which are the front face 202, back face 205, left face 203, right face 204, top face 207 and bottom face 206. The remote control will be described as if it is sitting vertically upstanding resting on its bottom face 206 facing a user (as illustrated in figure 10). The left to right direction is indicated in figure 10 by the arrow marked X. The bottom to top direction is indicated in figure 10 by the arrow marked Y. The front to back direction is orthogonal to the X and Y directions and is indicated in figure 5 by the marrow marked Z.

The width of an object is defined as its length in the X direction, the height of an objection is defined as its location in the Y direction, and the depth of an object as its length in the Z direction.

Each face comprises a surface that has been filleted, curved, and/or shaped to improve its ergonomics, and make it easier for a user to hold and use the remote control for long periods of time. The surfaces are generally not distinct but instead transition smoothly between adjacent faces. The front face has five buttons, which are the menu left button, the menu right button, the ok button, the channel selection button, and the return button.

Various options are available and various operating parameters can be set, and status interrogated, via menus that are displayed on a display 227 on the front face above the buttons.

Various status messages can be displayed on the display 227 such as battery status, temperature, local time, trip time, and the number, type, and status of connected electronic fishing appliances, which may of course include other remote controls of similar or different design.

When a communication channel has been selected on the remote control 210, various channel specific settings can be specified. Setting specific operational parameters for specific channels will allow the user to configure electronic fishing appliances 100 connected on the specified channel, the operational parameters that can be configured include:
Bite LED Colour (Options: Red, Green, Blue, Cyan, Yellow, Magenta, White, Off);
Night LED Colour (Options: Red, Green, Blue, Cyan, Yellow, Magenta, White, Off);
Tone Setting (Adjustable Range 200Hz to to 3135Hz);
Volume Setting (0% - 100% in 5% increments);
Roller wheel Sensitivity (Adjustable Range - Roller 1 - Roller 8), adjusting this parameter by remote control enables selecting a sensitivity from 24 levels;
Battery Level (%Value);
Bivvy Light Armed (On / Off);
Radio Signal (%Value);
Night Light Mode (Mode 1, 2, 3 & 4)
Auto Night Light Level, Swinger off until bite.
Manual Night Light level, Swinger off until bite.
Auto night light level, Swinger follows night light level & colour until bite, then matches Bite LED on bite.
Manual Night Light level, Swinger follows night light level & colour until and colour bite, then matches Bite LED on bite.

Ancillary fishing accessories 400 connected to the electronic fishing appliances 100 will also be controllable via the electronic fishing accessory 100.

Naturally, the above is only a possible configuration of control settings and configurable operational parameters. The remote control 210 can be reprogrammed with alternative menu layout, options and operational parameters and users will be able to configure and customize the remote control 210 and menu options as they see fit. This may involve setting up custom modes that enables many parameters on multiple electronic fishing appliances 100 to be configured by simply selecting the custom mode. The user interface of the remote control can therefore be configured as desired.

In some versions, the remote control will be supplied in differing forms to improve aesthetics. However, overall the form will remain similar to the form illustrated in figure 5.

Similarly, some versions of the remote control 210 accommodate additional buttons and/or allow the remote control to stand upright. The additional buttons include, in some embodiments, quick access buttons to facilitate the rapid configuration of key user functions.

### Remote operation

In use, the remote control 210 provides a central hub that establishes a wireless connection using a wireless transceiver to enable bi-directional communication with at least one electronic fishing appliance 100. As an example see figure 9, in which wireless communication is indicated by dotted lines, solid lines are used to indicate physical connections, and arrows are used to indicate the flow of information. See also figure 10, in which wireless communication is indicated by radiating wave icons.

The remote control 210 can also harmonize an operational parameter of connected electronic fishing appliances 100, and ancillary fishing accessories 400 connected via the electronic fishing appliances, that have the relevant adjustable operational parameter. This enables various modes to be formed such as a security mode in which the remote control 210 and any connected electronic fishing appliance 100 form a security system for detecting at least one unauthorized event. If an unauthorized event occurs, such as motion around an area or of a bite detector 110, the remote control 210 can put all or a select number of connected electronic fishing appliances 100 in to an alarm mode. This is useful to protect devices that are located far from the user.

The remote control 210 and bite detector 110 can also be configured to prevent exit from an alarm mode unless an appropriate code is entered. The bite detector 110 or remote control 210 can also serve to silence or stop all alarming electronic fishing appliances and/or ancillary fishing accessories, or reduce the alarm volume, be they alarming due to an alarm mode or otherwise.

Bite detectors 110 have many operational parameters, such as:
state of emitted light (colour, flashing frequency, and brightness);
intensity of notification; notification method by which a bite is signalled (vibrating, making a sound, emitting a light, and changing the state of emitted light);
sensitivity;
operational mode;
the state of the light emitted by an ancillary fishing accessory connected to the bite detector; and
any other parameter that is adjustable by a user of the bite detector;
These operational parameters can all be configured quickly and easily via the remote control 210. Other electronic fishing appliances may have all of some of the capabilities of the bite detector.

The remote control 210 enables remote control of electronic fishing appliances 100 and ancillary fishing appliances 400 by transmitting via the wireless transceiver one or more control signals to electronic fishing appliance 100 in wireless communication with the remote control 210. The buttons of the remote control 210 form a user interface to enable the desired control signals to be selected and sent.

The display 227 of the remote control 210, the six multicolour strip lights 228, and the speaker 226 form a versatile notification element. The notification element being adapted to receive via the wireless transceiver a status signal from at least one electronic fishing appliance 100, which may relate to the ancillary fishing accessory 400, in wireless communication with the remote control 210. The status signal being indicative of an operating status of the electronic fishing appliance 100 or ancillary fishing accessory 400, and the notification element being further adapted to alert a user of the status. One exemplary status would indicate a bite detected on a bite detector. Of course, the status signal may also be merely indicative of a remote control 210, connected bite detector 110 or connected ancillary fishing accessories, or other electronic fishing appliance 100 operation parameter. When multiple electronic fishing appliances are connected the status signal will includes an indication as to which electronic fishing appliances the status came from. For example, in one configuration, a bite detected on a bite detector 110 coupled to communication channel 2 will make the 2nd strip light flash or illuminate for a pre-set time in the same colour as the bite detector and at the same time the display 227 will indicate the type and direction of the bite.

Many electronic fishing appliances and ancillary fishing accessories can be controlled through the remote control 210 including:
bite detectors 110;
PIR detectors 280;
light, such as a bivvy light 250;
a battery pack;
a float, such as an illuminated float;
a hanger;
a swinger;
a weighing scale; and
any electronic fishing appliance, or ancillary fishing accessory, configured to communicate with the remote control 210.

The remote control 210 can also be configured to communicate with other remote controls 210' of similar of different design. The other remote control 210' may then enable the relaying of communications and thereby increase the range of the wireless communication network that is formed. Similarly, bite detectors 110 may relay communication and thereby increase the range of the wireless communication network that is formed. Such relaying enables multiple bite detectors 110 that are separated large distances, which exceed the range of a single remote control, to be controlled by a single remote control.

### Network

*An electronic fishing appliances 100, and connected ancillary fishing accessory 400, may join or* leave a wireless remote control network by one of several network establishing and maintenance protocols. The remote control 210 which provides the network is normally configured to automatically form the network by linking with electronic fishing appliances as they appear within a range of the remote control 210. However, electronic fishing appliances 100 generally have to undergo a pairing procedure beforehand to ensure that only desired electronic fishing appliances 100 enter into communications with the remote control 210. To improve the security of the network and minimize cross talk communications with the remote control 210 are encrypted.

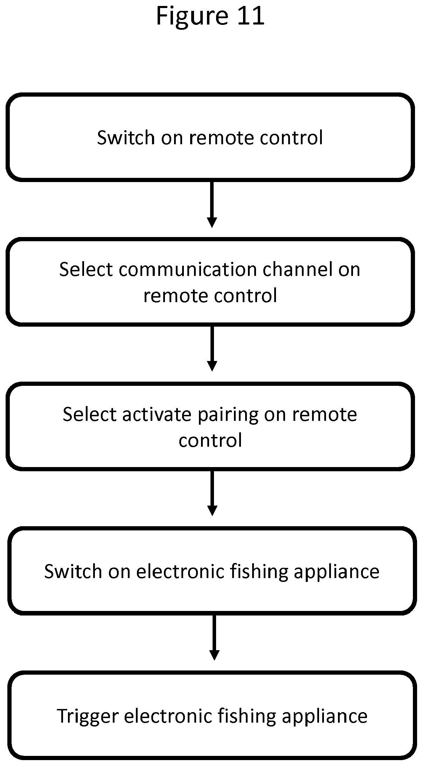

As shown on figure 11, the pairing process to pair an electronic fishing appliance 100 to a remote control 210 comprises the following steps: bringing the electronic fishing appliance 100 into the range of the wireless communication of the remote control 210; switching on the remote control 210; entering the channel menu on the remote control 210 and selecting a communication channel to pair; selecting activate pairing on the remote control 210; switching on the electronic fishing appliance 100; and triggering or activating the electronic fishing appliance 100. The electronic fishing appliance 100 and the remote control 210 are then paired. As an example of triggering, triggering a bite detector 110 comprises pressing the mode button on the bite detector 110 or triggering either of the motion sensors.

Ancillary fishing appliances 400 that are connected to a paired electronic fishing appliance do not have to be paired as the pairing is provided by the paired electronic fishing appliance to which they are connected.

As shown on figure 9, the remote control 210 is configured to communicate with a secondary electronic fishing accessory 300 that is coupled to a bite detector 110, through a port 108. From a network view, the secondary electronic fishing accessory 300 is then effectively treated the same as a separate electronic fishing appliance 100 that is wirelessly controlled by the remote control 210.

The remote control 210 is configured to control the ancillary fishing accessory 300 via the port 108 on the bite detector 110, and to acquire data from the ancillary fishing accessory 300 via the port 108. The port 108 is a physical connection comprising four electrical connectors and has the form of a 3.5 mm jack. The port is configured to recognize the ancillary fishing accessory 300 that is connected. The coupled ancillary fishing accessory 300 can then be control in a similar manner to electronic fishing appliances 200 that are directly wirelessly connected to the remote control 210.

The port 108 of the bite detector 110 therefore enables ancillary fishing accessories without wireless connection abilities to join the wireless network that is provided by the remote control 210.

The features disclosed in relation to particular aspects are not limited as such and further embodiments may therefore be formed from a combination of any of the disclosed features.

When used with a remote control 210, the bite detector 110 is part of a network and may therefore operate using the combined abilities and signals of all or a subset of appliances on the network.

The universal port 108 and wired accessory port 109 enable easy extension of the capabilities of the bite detector 110 and ancillary fishing accessories 400. Therefore, additional devices added to the bite detector 110 or network may add new functionality to the electronic fishing appliance or ancillary fishing accessories.

## Claims

1. An electronic fishing appliance (100) comprising:
a port (10) for releasably connecting to an ancillary fishing accessory (400), the ancillary fishing accessory having at least one light-emitting element (80);
a controller (20) configured to control the state of the light emitted by the at least one light-emitting element when the ancillary fishing accessory is connected to the port;
wherein the electronic fishing appliance is configured to communicate wirelessly with a remote control and transmit data to the remote control;
**characterized in that**:
the electronic fishing appliance is configured to receive data from the connected ancillary fishing accessory, and wherein the electronic fishing appliance is configured to relay data from the connected ancillary fishing accessory to the remote control.

2. The electronic fishing appliance of claim 1, wherein the electronic fishing appliance is configured to adjust the state of the light emitted to a state set by a user on the electronic fishing appliance.

3. The electronic fishing appliance of any preceding claim, wherein the electronic fishing appliance is configured to adjust the state of the light emitted from a first state to a second state in response to stimulus.

4. The electronic fishing appliance of claim 3, wherein the stimulus is a change in status of the electronic fishing appliance, or the ancillary fishing accessory.

5. The electronic fishing appliance of claim 3, wherein the stimulus comprises a signal from another electronic fishing appliance.

6. The electronic fishing appliance of any of claims 3 to 5, wherein either:
the stimulus is motion of a fishing line; or
the stimulus is an alarm signal, wherein the alarm signal indicates a security breach has occurred.

7. The electronic fishing appliance of any preceding claim, wherein the state of the light emitted is automatically adjusted to reflect an operational mode.

8. The electronic fishing appliance of any preceding claim, wherein the electronic fishing appliance is configured to identify the type of the ancillary fishing accessory that is connected.

9. The electronic fishing appliance of any preceding claim, wherein the electronic fishing appliance is configured to control one or more operational parameters of the ancillary fishing accessory.

10. A combination comprising:
the electronic fishing appliance (100) of any preceding claim; and
an ancillary fishing accessory (400, 410) for indicating movement of a fishing line, the ancillary fishing accessory comprising:
a body comprising at least one light-emitting element (80);
a connector for releasably coupling the body to a fishing line; and
a plug for releasably connecting to a port (109) on the electronic fishing appliance (100, 110) and for transmitting electric power to the at least one light-emitting element;
wherein the ancillary fishing accessory is configured so that the state of the light emitted is controllable by the electronic fishing appliance.

11. A combination comprising:
the electronic fishing appliance (100) of any of claims 1 to 9; and
an ancillary fishing accessory (300, 310), the ancillary fishing accessory comprising a plug for releasably connecting to a port on the electronic fishing appliance (100, 110);
wherein the ancillary fishing accessory is configured to transmit data to the remote control (210), the transmitted data being relayed through the electronic fishing appliance.

12. The combination of claim 10, wherein the body is at least partially transparent.

13. The combination of any claim 10 or 12, wherein the ancillary fishing accessory comprises a coupling (50) for attaching at least one removable weight for damping motion.

14. The combination of any of claims 10, 12 or 13, wherein the ancillary fishing accessory is a swinger or hanger (410).

15. The combination of claim 11 wherein the ancillary fishing accessory is a PIR sensor (310).

## Patentansprüche

1. Elektronisches Fischfanggerät (100), Folgendes umfassend:
einen Anschluss (10) zum lösbaren Anschließen an ein Hilfszubehör (400) zum Fischfang, wobei das Hilfszubehör zum Fischfang mindestens ein lichtemittierendes Element (80) aufweist,
eine Steuerung (20), die dafür konfiguriert ist, den Zustand des Lichts zu steuern, das von dem mindestens einen lichtemittierenden Element ausgegeben wird, wenn das Hilfszubehör zum Fischfang an den Anschluss angeschlossen ist,
wobei das elektronische Fischfanggerät dafür konfiguriert ist, drahtlos mit einer Fernsteuerung zu kommunizieren und Daten an die Fernsteuerung zu übertragen,
**dadurch gekennzeichnet, dass**:
das elektronische Fischfanggerät dafür konfiguriert ist, Daten von dem angeschlossenen Hilfszubehör zum Fischfang zu empfangen, und wobei das elektronische Fischfanggerät dafür konfiguriert ist, Daten von dem angeschlossenen Hilfszubehör zum Fischfang an die Fernsteuerung weiterzugeben.

2. Elektronisches Fischfanggerät nach Anspruch 1, wobei das elektronische Fischfanggerät dafür konfiguriert ist, den Zustand des emittierten Lichts in einen Zustand zu ändern, der von einem Benutzer des elektronischen Fischfanggeräts eingestellt ist.

3. Elektronisches Fischfanggerät nach einem der vorhergehenden Ansprüche, wobei das elektronische Fischfanggerät dafür konfiguriert ist, den Zustand des emittierten Lichts in Reaktion auf Stimulation von einem ersten Zustand in einen zweiten Zustand zu ändern.

4. Elektronisches Fischfanggerät nach Anspruch 3, wobei die Stimulation eine Veränderung des Status des elektronischen Fischfanggeräts oder des Hilfszubehörs zum Fischfang ist.

5. Elektronisches Fischfanggerät nach Anspruch 3, wobei die Stimulation ein Signal von einem anderen elektronischen Fischfanggerät umfasst.

6. Elektronisches Fischfanggerät nach einem der Ansprüche 3 bis 5, wobei entweder:
die Stimulation eine Bewegung einer Angelschnur ist; oder
die Stimulation ein Alarmsignal ist, wobei das Alarmsignal angibt, dass eine Sicherheitsverletzung aufgetreten ist.

7. Elektronisches Fischfanggerät nach einem der vorhergehenden Ansprüche, wobei der Zustand des emittierten Lichts automatisch justiert wird, um einen Betriebsmodus widerzuspiegeln.

8. Elektronisches Fischfanggerät nach einem der vorhergehenden Ansprüche, wobei das elektronische Fischfanggerät dafür konfiguriert ist, die Art des angeschlossenen Hilfszubehörs zum Fischfang zu identifizieren.

9. Elektronisches Fischfanggerät nach einem der vorhergehenden Ansprüche, wobei das elektronische Fischfanggerät dafür konfiguriert ist, einen oder mehrere Betriebsparameter des Hilfszubehörs zum Fischfang zu steuern.

10. Kombination, die Folgendes umfasst:
das elektronische Fischfanggerät (100) nach einem der vorhergehenden Ansprüche; und
ein Hilfszubehör (400, 410) zum Fischfang zum Angeben einer Bewegung einer Angelschnur, wobei das Hilfszubehör zum Fischfang Folgendes umfasst:
einen Hauptteil, der mindestens ein lichtemittierendes Element (80) umfasst,
ein Anschlusselement zum lösbaren Koppeln des Hauptteils mit einer Angelschnur und
einen Stecker zum lösbaren Anschließen an einen Anschluss (109) an dem elektronischen Fischfanggerät (100, 110) und zum Übertragen von Elektroenergie an das mindestens eine lichtemittierende Element,
wobei das Hilfszubehör zum Fischfang derart konfiguriert ist, dass der Zustand des emittierten Lichts durch das elektronische Fischfanggerät steuerbar ist.

11. Kombination, die Folgendes umfasst:
das elektronische Fischfanggerät (100) nach einem der Ansprüche 1 bis 9; und
ein Hilfszubehör (300, 310) zum Fischfang, wobei das Hilfszubehör zum Fischfang einen Stecker zum lösbaren Anschließen an einen Anschluss an dem elektronischen Fischfanggerät (100, 110) umfasst;
wobei das Hilfszubehör zum Fischfang dafür konfiguriert ist, Daten an die Fernsteuerung (210) zu übertragen, wobei die übertragenen Daten durch das elektronische Fischfanggerät weitergegeben werden.

12. Kombination nach Anspruch 10, wobei der Hauptteil zumindest teilweise transparent ist.

13. Kombination nach Anspruch 10 oder 12, wobei das Hilfszubehör zum Fischfang eine Kopplung (50) zum Anbringen mindestens eines entfernbaren Gewichts zum Dämpfen von Bewegung umfasst.

14. Kombination nach Anspruch 10, 12 oder 13 wobei das Hilfszubehör zum Fischfang ein Swinger oder ein Hanger (410) ist.

15. Kombination nach Anspruch 11, wobei das Hilfszubehör zum Fischfang ein PIR-Sensor (310) ist.

## Revendications

1. Appareil de pêche électronique (100) comprenant :
un port (10) destiné à être connecté de façon libérable à un accessoire de pêche auxiliaire (400), l'accessoire de pêche auxiliaire ayant au moins un élément électroluminescent (80) ;
un dispositif de commande (20) configuré pour commander l'état de la lumière émise par l'au moins un élément électroluminescent lorsque l'accessoire de pêche auxiliaire est connecté au port ;
l'appareil de pêche électronique étant configuré pour communiquer sans fil avec une télécommande et transmettre des données à la télécommande,
**caractérisé en ce que** :
l'appareil de pêche électronique est configuré pour recevoir des données provenant de l'accessoire de pêche auxiliaire connecté, et l'appareil de pêche électronique est configuré pour relayer des données de l'accessoire de pêche auxiliaire connecté à la télécommande.

2. Appareil de pêche électronique selon la revendication 1, dans lequel l'appareil de pêche électronique est configuré pour ajuster l'état de la lumière émise à un état réglé par un utilisateur sur l'appareil de pêche électronique.

3. Appareil de pêche électronique selon l'une quelconque des revendications précédentes, dans lequel l'appareil de pêche électronique est configuré pour ajuster l'état de la lumière émise d'un premier état à un deuxième état en réponse à un stimulus.

4. Appareil de pêche électronique selon la revendication 3, dans lequel le stimulus est un changement de statut de l'appareil de pêche électronique, ou de l'accessoire de pêche auxiliaire.

5. Appareil de pêche électronique selon la revendication 3, dans lequel le stimulus comprend un signal provenant d'un autre appareil de pêche électronique.

6. Appareil de pêche électronique selon l'une quelconque des revendications 3 à 5, dans lequel soit : le stimulus est un mouvement d'une ligne de pêche ; soit le stimulus est un signal d'alarme, le signal d'alarme indiquant qu'une brèche de sécurité s'est produite.

7. Appareil de pêche électronique selon l'une quelconque des revendications précédentes, dans lequel l'état de la lumière émise est automatiquement ajusté pour refléter un mode opérationnel.

8. Appareil de pêche électronique selon l'une quelconque des revendications précédentes, dans lequel l'appareil de pêche électronique est configuré pour identifier le type de l'accessoire de pêche auxiliaire qui est connecté.

9. Appareil de pêche électronique selon l'une quelconque des revendications précédentes, dans lequel l'appareil de pêche électronique est configuré pour commander un ou plusieurs paramètres opérationnels de l'accessoire de pêche auxiliaire.

10. Combinaison comprenant :
l'appareil de pêche électronique (100) selon l'une quelconque des revendications précédentes ; et
un accessoire de pêche auxiliaire (400, 410) destiné à indiquer un déplacement d'une ligne de pêche, l'accessoire de pêche auxiliaire comprenant :
un corps comprenant au moins un élément électroluminescent (80) ;
un connecteur destiné à coupler de façon libérable le corps à une ligne de pêche ; et
une fiche destinée à se connecter de façon libérable à un port (109) sur l'appareil de pêche électronique (100, 110) et pour transmettre de l'énergie électrique à l'au moins un élément électroluminescent ;
l'accessoire de pêche auxiliaire étant configuré de telle sorte que l'état de la lumière émise peut être commandé par l'appareil de pêche électronique.

11. Combinaison comprenant :
l'appareil de pêche électronique (100) selon l'une quelconque des revendications 1 à 9 ; et
un accessoire de pêche auxiliaire (300, 310), l'accessoire de pêche auxiliaire comprenant une fiche pour se connecter de manière amovible à un port de l'appareil de pêche électronique (100, 110) ;
l'accessoire de pêche auxiliaire étant configuré pour transmettre des données à la télécommande (210), les données transmises étant relayées par le biais de l'appareil de pêche électronique.

12. Combinaison selon la revendication 10, dans laquelle le corps est au moins partiellement transparent.

13. Combinaison selon l'une quelconque des revendications 10 et 12, dans laquelle l'accessoire de pêche auxiliaire comprend un couplage (50) destiné à attacher au moins un poids amovible destiné à amortir un mouvement.

14. Combinaison selon l'une quelconque des revendications 10, 12 et 13, dans laquelle l'accessoire de pêche auxiliaire est un swinger ou un hanger (410).

15. Combinaison selon la revendication 11, dans laquelle l'accessoire de pêche auxiliaire est un capteur PIR (310).
